# EUROPÄISCHE PATENTSCHRIFT

(11) **EP 1 902 933 B1**
(45) Veröffentlichungstag und Bekanntmachung des Hinweises auf die Patenterteilung: **07.03.2012**
(21) Anmeldenummer: 07017168.1
(22) Anmeldetag: 01.09.2007
(51) Int. Cl.: B62D 61/12

(54) **Achslift für luftgefederte Fahrzeugachsen**
Axle lift for pneumatically suspended vehicle axles
Dispositif de levage pour essieux des véhicules à suspension pneumatique

(30) Priorität: 19.09.2006 DE 102006044598
(43) Veröffentlichungstag der Anmeldung: 26.03.2008
(73) Patentinhaber: BPW Bergische Achsen KG, 51674 Wiehl (DE)
(72) Erfinder: Steinbach, Rolf, 51643 Gummersbach (DE); Luckau, Bianca, 53797 Lohmar (DE)
(74) Vertreter: Christophersen & Partner

(56) Entgegenhaltungen:
- EP-A- 0 961 726
- EP-A- 1 332 954
- EP-A- 1 661 739
- DE-U1- 20 317 350

## Beschreibung

Die Erfindung betrifft einen Achslift für luftgefederte Fahrzeugachsen nach dem Oberbegriff des Patentanspruchs 1. Die Erfindung betrifft ferner eine Konsole zur Abstützung eines Achslifts nach dem Oberbegriff des Patentanspruchs 16.

Ein Achslift für luftgefederte Fahrzeugachsen sowie eine Konsole zur Abstützung eines Achslifts mit diesen Merkmalen ist aus der EP 0 961 726 B1 bekannt. Als Hebevorrichtung für die Fahrzeugachse dient ein druckluftbetrieberier Membranzylinder, welcher auf einer unterhalb der Lenkerstütze angeordneten Konsole sitzt. Um den Achslift mit unterschiedlichen Luftfederungen kombinieren zu können, ist die Konsole in verschiedenen Positionen an der Lenkerstütze festlegbar. Zu diesem Zweck sind in der Konsole mehrere Bohrungen als Alternativen ausgebildet, über welche die Konsole verdrehsicher an der Lenkerstütze festlegbar ist. Alleine diese Bohrungen sind jedoch nicht geeignet, die beim Anheben der Achse erheblichen Kräfte auf die Lenkerstütze zu übertragen. Vielmehr übergreift die Konsole mit daran angeformten Schenkeln beidseitig die Lenkerstütze, wobei die Schenkel unter anderem auf jenem Lagerbolzen aufsitzen, welcher den jeweiligen Längslenker an der Lenkerstütze an lenkt. Daher wird ein Teil der beim Anheben der Fahrzeugachse wirkenden Kräfte auf diesen Lagerbolzen und damit auf Fahrwerkskomponenten übertragen, die am dynamischen Fahrprozess beteiligt sind.

Aus der US 4,773,670 A ist ein Achslift für luftgefederte Fahrzeugachsen mit einer Hebevorrichtung in Gestalt eines unterhalb eines Längslenkers angeordneten Faltenbalgs bekannt. Dessen oberes Ende ist mit dem Längslenker verschraubt, wohingegen sich das untere Ende des Faltenbalgs an einer Konsole abstützt, die ihrerseits Teil der Federstütze ist. Nachteilig an dieser Konstruktion ist die fehlende Möglichkeit einer Anpassung des Achslifts an unterschiedliche Einbaugeometrien. Derartige unterschiedliche Einbaugeometrien können sich insbesondere aus dem Umstand ergeben, dass in der Praxis des Fahrzeugbaus an baugleichen Lenkerstützen unterschiedlich gestaltete Längslenker und Achskonstruktionen befestigbar sind, z. B. je nach Anwendungsfall gerade oder gebogene Längslenker oder auch solche Längslenker, die an ihrem rückwärtigen Ende zur Aufnahme einer Tragluftfeder ein- oder mehrfach verkröpft gestaltet sind.

Ziel der Erfindung ist eine kräftemäßige Trennung des Achslifts von den am dynamischen Fahrprozess beteiligten Fahrwerkskomponenten, wobei die Möglichkeit der Anpassung an unterschiedliche Achskonstruktionen beibehalten werden soll.

Zur **Lösung** dieser Aufgabe wird ein Achslift für luftgefederte Fahrzeugachsen mit den in Patentanspruch 1 angegebenen Merkmalen, und eine Konsole zur Abstützung eines Achslifts mit den in Patentanspruch 16 angegebenen Merkmalen vorgeschlagen.

Diese Lösungen mit einer weiteren Lochreihe mit einem weiteren Bolzen führen zu einer kräftemäßigen Trennung des Achslifts von den am dynamischen Fahrprozess beteiligten Fahrwerkskomponenten, da die Abstützung der die Hebevorrichtung aufnehmenden Konsole ausschließlich an der Lenkerstütze selbst erfolgt, und nicht an solchen Teilen der Fahrzeugachse, die am dynamischen Fahrprozess beteiligt sind. Vor allem werden beim Betrieb des Achslifts keine Kräfte direkt lauf das den Längslenker mit der Lenkerstütze verbindende Schwenkgelenk übertragen. Diese Kräfte können unter Umständen zum Lösen des das Schwenkgelenk bildenden Lagerbolzens führen.

Mit einer Ausgestaltung des Achslifts wird vorgeschlagen, dass die Lenkerstütze zwei Seitenwände aufweist, zwischen denen sich das vordere Ende des Längslenkers befindet, wobei die Seitenwände im Bereich ihres in Fahrtrichtung hinteren Randes jeweils eine Querbohrung aufweisen, durch die und durch eines der Löcher der weiteren Lochreihe der Bolzen hindurch führt. In diesem Fall befindet sich die Querbohrung vorzugsweise in einer am hinteren Rand der Lenkerstütze angeformten Lasche.

Mit einer Ausgestaltung wird vorgeschlagen, dass die Löcher der Lochreihe bzw. die Löcher der weiteren Lochreihe auf einer Kreislinie angeordnet sind, deren Kreismittelpunkt mit dem Schwenkgelenk zusammenfällt. Dabei wird eine konstruktive Ausgestaltung bevorzugt, bei der sich die Lochreihe bzw. die weitere Lochreihe in der Konsole befindet.

Ferner wird vorgeschlagen, dass die Anzahl der Löcher in den beiden Lochreihen gleich ist. In diesem Fall sollten die auf das Schwenkgelenk bezogenen Winkelabstände zwischen den Löchern der hinteren Lochreihe gleich den Winkelabständen zwischen den Löchern der vorderen Lochreihe sein.

Mit einer weiteren Ausgestaltung wird vorgeschlagen, dass sich die Konsole aus einer zentralen Trägerplatte, an der sich die Hebevorrichtung abstützt, und beidseitig angeordneten Schenkeln zusammensetzt, in denen sich jeweils die beiden Lochreihen befinden, wobei im Bereich der vorderen Lochreihen ein Druckstück zwischen die Schenkel eingesetzt und mit diesen verschraubt ist, und wobei sich das Druckstück mit einer daran ausgebildeten Druckfläche von unten her an der Lenkerstütze abstützt.

Um unter bestimmten Umständen ein Absenken des vorderen Teils der Konsole bezüglich der Lenkerstütze zu verhindern, kann das Druckstück mit einem formschlüssig in eine Öffnung oder Ausnehmung der Lenkerstütze eingreifenden Vorsprung versehen sein.

Gemäß einer bevorzugten Ausgestaltung ist die Hebevorrichtung mit einem aus dem Gehäuse der Hebevorrichtung herausgeführten Abtriebsteil gegen einen auf einer horizontalen Achse gelagerten Schwenkarm abstützbar, der sich bei betätigter Hebevorrichtung von unten gegen den Längslenker legt und diesen anhebt. Hierbei kann es von Vorteil sein, wenn der Schwenkarm an der Konsole schwenkbar gelagert ist. Ferner kann von Vorteil sein, wenn sich die Achse der schwenkbaren Lagerung des Schwenkarms unterhalb des Schwenkgelenks, d.h. des Lagerbolzens für den Längslenker, befindet.

Vorzugsweise dient als Abtriebsteil der Hebevorrichtung eine Kolbenstange mit einer daran drehbar gelagerten Rolle, wobei sich die Rolle von unten her gegen eine Abrollfläche an dem Schwenkarm abstützt und wobei die Abrollfläche als zur Rolle hin konkav gekrümmte Evolvente gestaltet, bei der die Flächennormale des jeweiligen Anlageortes der Rolle mit der Längsachse der Kolbenstange zusammenfällt. Infolge dieser Gestaltung der Abrollfläche werden Querkräfte auf die das Abtriebsteil bildende Kolbenstange weitgehend vermieden, wodurch übermäßig große Reibungskräfte für die Axialführung der Kolbenstange vermieden werden.

Weitere Einzelheiten und Vorteile der Erfindung ergeben sich aus der nachfolgenden Beschreibung zweier Ausführungsbeispiele und anhand der zugehörigen Zeichnungen. Darin zeigen:
- Fig. 1: in perspektivischer, überwiegend seitlicher Darstellung ein erstes Ausführungsbeispiel des Achslifts, wobei von der Fahrzeugachse selbst lediglich einer ihrer beiden Längslenker dargestellt ist;
- Fig. 2: den Achslift nach Fig. 1, jedoch aus Gründen der besseren Übersicht ohne den daran angeordneten Schwenkarm;
- Fig. 3: eine perspektivische Einzeldarstellung einer Lenkerstütze einschließlich eines von unten an der Lenkerstütze anliegenden Druckstücks;
- Fig.4: eine perspektivische Einzeldarstellung einer Konsole des Achslifts einschließlich des zwischen den Schenkeln der Konsole angeordneten Druckstücks;
- Fig. 5: ein zweites Ausführungsbeispiel des Achslifts;
- Fig. 6: den Achslift nach Fig. 5 in anderer Perspektive, und aus Gründen der besseren Übersicht ohne den daran angeordneten Schwenkarm;
- Fig. 7: eine perspektivische Einzeldarstellung der Lenkerstütze einschließlich des von unten an der Lenkerstütze anliegenden Druckstücks;
- Fig.8: eine perspektivische Einzeldarstellung nur der Konsole des Achslifts einschließlich des zwischen den Schenkeln der Konsole angeordneten Druckstücks und
- Fig. 9: eine der Fig. 8 entsprechende Darstellung der Konsole und des an der Konsole angelenkten Schwenkarms.

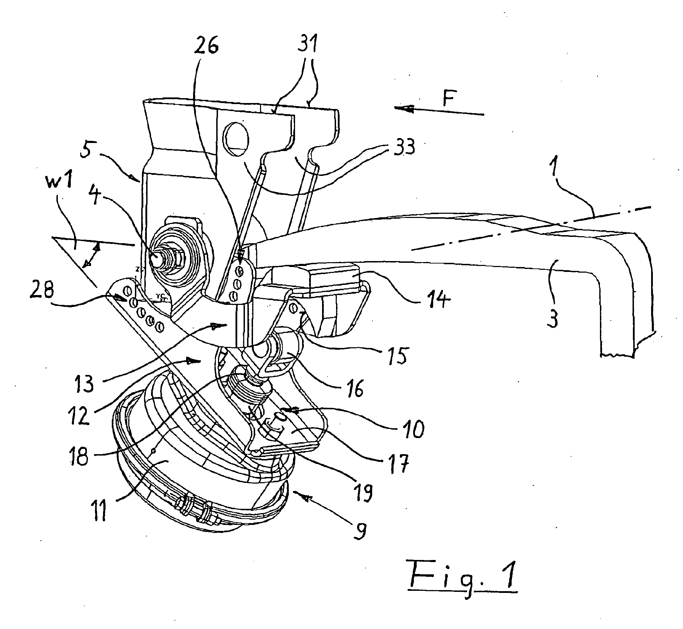

Fig. 1 zeigt nur Teile einer luftgefederten Fahrzeugachse, wobei von dem die Fahrzeugräder lagernden Achskörper 1 nur dessen Mittellinie bezeichnet ist. Starr verbunden ist der Achskörper 1 nahe jedem seiner Enden mit einem Längslenker 3. Die Verbindung von Achskörper 1 und Längslenker 3 erfolgt üblicherweise über Schraubbügel. Jeder Längslenker 3 ist an seinem in Fahrtrichtung F vorn liegenden Ende mittels eines ein Schwenkgelenk 4 bildenden Lagerbolzens an einer Lenkerstütze 5 schwenkbar, die ihrerseits starr mit dem Fahrzeugrahmen verbunden ist. An seinem hinteren Ende ist jeder Längslenker 3 über eine Luftfeder gegenüber dem Fahrzeugrahmen abgestützt. Außerdem kann sich zwischen Fahrzeugrahmen und jedem Längslenker ein Stoßdämpfer befinden.

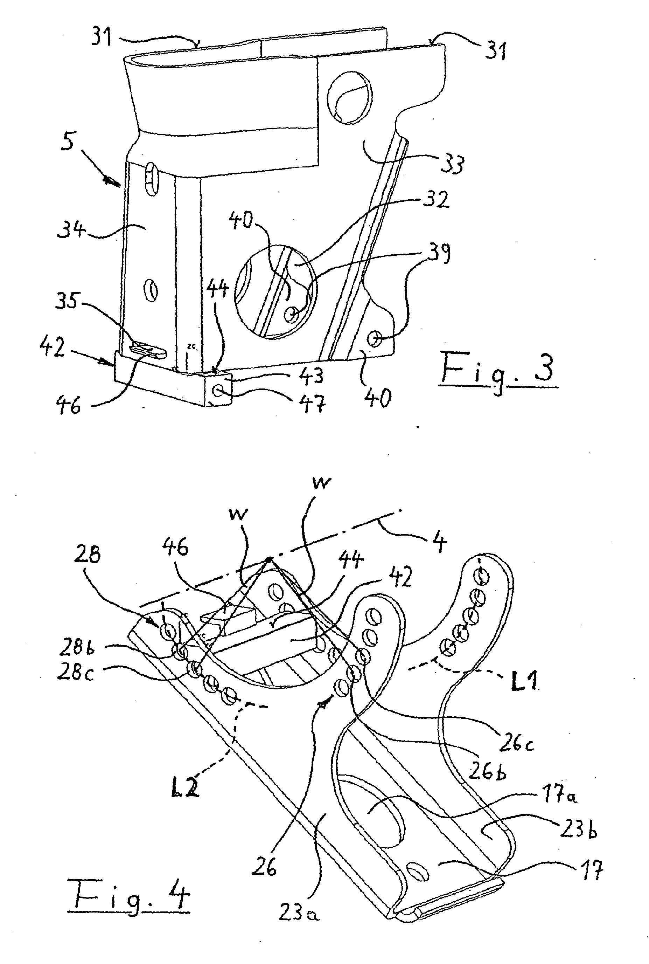

Um die in Fig. 1 in der Fahrstellung dargestellte Luftfederachse, falls diese für den Fahrbetrieb nicht benötigt wird, in ihre angehobene Stellung zu heben, ist unter der Lenkerstütze 5 eine druckmittelbetätigte Hebevorrichtung 9 vorgesehen, die bei dem hier beschriebenen Ausführungsbeispiel als druckluftbetätigter Membranzylinder ausgebildet ist. Der Membranzylinder 11 ist mittels einer Konsole 12 an der Lenkerstütze 5 angeordnet. Hierzu ist die Konsole 12 mit einer Aufnahme 10 zur starren Befestigung des Membranzylinders 11 versehen. Bestandteile der Aufnahme 10 sind eine Öffnung 17a (Fig. 4) in der Konsole 12 sowie zwei Verschraubungen. Auf die Verbindung zwischen der Konsole 12 mit der Aufnahme 10 für die Hebevorrichtung 9 und der Lenkerstütze 5 wird im Folgenden noch näher eingegangen werden.

Zu der Achshebevorrichtung gehört ferner ein Schwenkarm 13. Dieser ist bei dem hier beschriebenen, ersten Ausführungsbeispiel um das Schwenkgelenk des Längslenkers 3 verschwenkbar, d.h. um den Lagerbolzen 4. Am freien Ende ist der Schwenkarm 13 mit einem Pufferelement 14 versehen ist, mit dem sich der Schwenkarm 13 von unten gegen die Unterseite des Längslenkers 3 legen kann.

An seiner Unterseite, dem Pufferelement 14 abgewandt, ist an dem Schwenkarm 13 eine Abrollfläche 15 ausgebildet. Diese Abrollfläche 15 weist, wie später noch im Einzelnen beschrieben wird, die Gestalt einer Evolvente auf.

Das Gehäuse des mit Druckluft betriebenen Membranzylinders 11 ist mit Hilfe von Schrauben an der Unterseite einer Trägerplatte 17 der Konsole 12 befestigt. Hierbei ragt ein Teil des Membranzylinders 11 durch die große Öffnung 17a (Fig.4) der Trägerplatte 17 nach oben. In diesem oberen Bereich ist der Membranzylinder 11 mit einer Axialführung 19 für eine aus dem Membranzylinder heraus führende, durch das Druckmittel des Membranzylinders angetriebene Kolbenstange 18 versehen. Bei der Axialführung 19 kann es sich z. B. um eine Kunststoffbuchse handeln, welche die Kolbenstange 18 auf einem gewissen Teil ihrer Länge führt. An ihrem äußersten Ende ist die Kolbenstange 18 mit einer Lagerung für eine vorzugsweise wälzgelagerte Rolle 20 versehen. Bei Betätigung des Membranzylinders 11 mittels Druckluft fährt die Kolbenstange 18 aus, wodurch die Rolle 20 gegen die gegenüberliegende Abrollfläche 15 des Schwenkarms 13 gelangt. Hierbei dreht der Schwenkarm 13 um das Schwenkgelenk 4, drückt über das Pufferelement 14 von unten gegen den Längslenker 3, wodurch sich dieser anhebt.

Außerhalb des Achsliftbetriebs ist die Kolbenstange 18 in den Membranzylinder 11 zurückgezogen, wodurch sich auch der Schwenkarm 13 absenkt, und dieser einschließlich seines Pufferelements 14 keinerlei Kontakt zu dem Längslenker 3 hat.

Die Abrollfläche 15 des als Kraftübertragungsglied dienenden Schwenkarms 13 ist als zu der Rolle 20 hin konkav gekrümmte Evolvente gestaltet. Der Verlauf der Evolvente ist hierbei dergestalt, dass die Flächennormale jenes Ortes, an dem die Rolle 20 an der Abrollfläche 15 anliegt, exakt mit der Längsachse der Kolbenstange 18 zusammenfällt. Infolge dieser Evolventengestaltung wird erreicht, dass keine oder allenfalls sehr geringe Querkräfte auf die Rolle 20 und damit auf die Kolbenstange 18 ausgeübt werden. Gleichwohl ist es sinnvoll, die Kolbenstange 18 axial zu führen, wozu nahe dem Austritt der Kolbenstange 18 aus dem Gehäuse des Membranzylinders 11 die Axialführung 19 an dem Gehäuse befestigt ist.

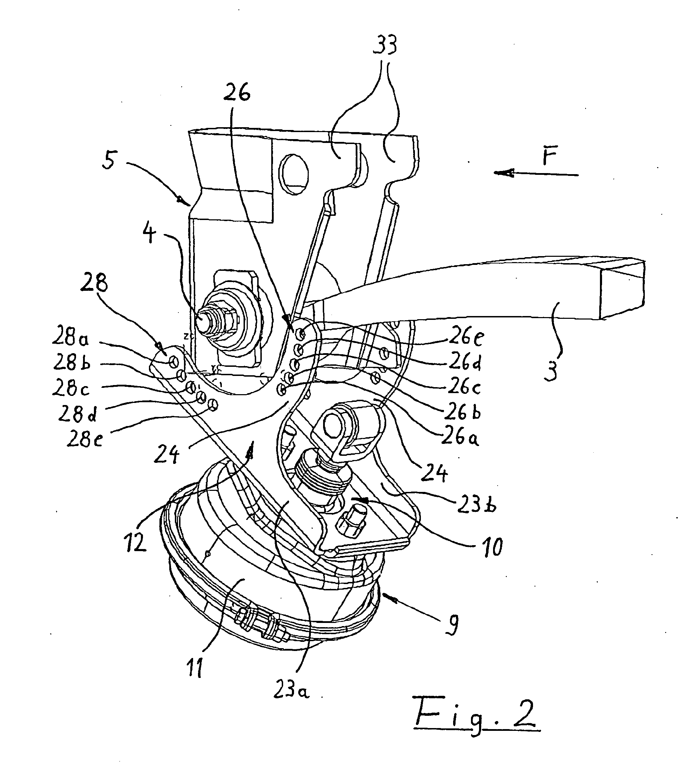

Im Folgenden wird anhand der Fign. 2, 3 und 4 beschrieben, wie die den Membranzylinder 11 aufnehmende Konsole 12 in verschiedenen Stellungen einstellbar an der Lenkerstütze 5 befestigt ist.

Die Konsole 12 ist ein einstückiges Blechformteil, bestehend aus der angewinkelten Trägerplatte 17 sowie beidseits dazu senkrecht angeordneten Schenkeln 23a, 23b. Etwa in der Längsmitte der Trägerplatte 17 sind die Schenkel 23a, 23b nach Art von Vorsprüngen 24 stark verlängert. Dort befindet sich in jedem der beiden Schenkel eine erste Lochreihe 26 aus z. B. fünf Löchern 26a - 26e. Nahe des schräg in Fahrtrichtung F weisenden Endes der Trägerplatte 17 ist jeder der beiden Schenkel 23a, 23b mit einer weiteren Lochreihe 28 versehen. Diese besteht beim Ausführungsbeispiel wiederum aus fünf Löchern 28a - 28e.

Alle Löcher 26a - 26e der ersten Lochreihe 26 sind auf einer Kreislinie L1 (Fig. 4) angeordnet, deren Kreismittelpunkt mit dem Schwenkgelenk des Längslenkers 3, also der Mittelachse des Lagerbolzens 4, zusammenfällt. Alle Löcher 28a - 28e der zweiten Lochreihe 28 sind auf einer Kreislinie L2 angeordnet, deren Kreismittelpunkt ebenfalls mit dem das Schwenkgelenk definierenden Lagerbolzen 4 zusammenfällt.

Die auf das Schwenkgelenk 4 bezogenen Winkelabstände zwischen den Löchern 26a - 26e der hinteren Lochreihe 25 können gleich den Winkelabständen zwischen den jeweils korrespondierenden Löchern 28a - 28e der vorderen Lochreihe 28 sein. Zum Verständnis ist in Fig. 4 einmal der Winkel w zwischen den Löchern 26b, 26c, und zum anderen der gleich große Winkel w zwischen den Löchern 28b, 28c eingezeichnet. Der Winkel zwischen den Löchern 26c, 28c und 26d, 28d könnte dann wiederum zu dem Winkel w differieren.

Die Fig. 3 zeigt in perspektivischer Darstellung die Lenkerstütze 5. Deren oberer Rand 31 ist mit einem Längsträger des Fahrzeuges verschweißbar. Eine große Öffnung 32 in beiden Seitenwänden 33 der Lenkerstütze 5 dient u. a. dem Hindurchtreten des Lagerbolzens 4 für den Längslenker 3. Die beiden Seitenwände 33 sind über eine Stirnwand 34 miteinander verbunden, die in Fahrtrichtung F weist. Nahe ihres unteren Randes ist die Stirnwand 34 mit einer Öffnung oder Ausnehmung 35 versehen. Diese ist hier als horizontaler Schlitz gestaltet.

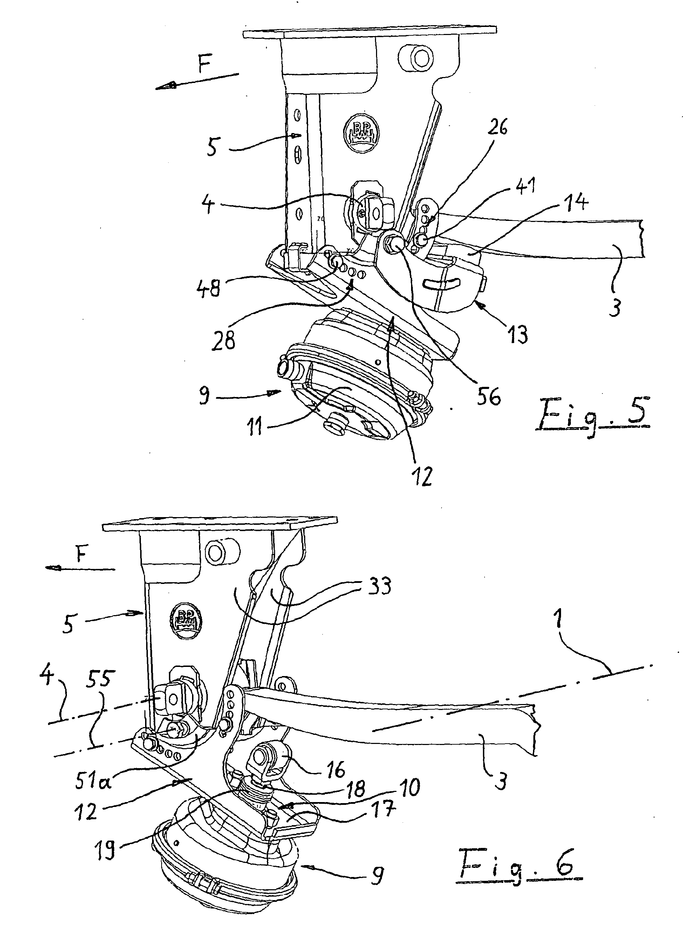

Die Seitenwände 33 weisen im Bereich ihres in Fahrtrichtung hinteren Randes jeweils eine Querbohrung 39 auf. Bei dem dargestellten Ausführungsbeispiel befinden sich die Querbohrungen 39 an Laschen 40, die unten am hinteren Rand der Lenkerstütze 5 angeformt sind. Die Laschen 40 befinden sich in einer Ebene, die etwas außerhalb der Ebene der Seitenwände 33 liegt. Der Durchmesser der Querbohrung 39 ist ungefähr gleich den Durchmessern der fünf Löcher 26a - 26e der Konsole 12. Auf diese Weise lassen sich Schraubbolzen 41 (Fig. 5) zugleich durch die Querbohrungen 39 und das jeweils dahinter angeordnete Loch der Lochreihe 26 hindurchsetzen.

In den Fign. 3 und 4 jeweils dargestellt ist ein Druckstück 42. Das Druckstück 42 verfügt über zwei Stirnflächen 43, deren gegenseitiger Abstand geringfügig geringer ist, als der Innenabstand der Seitenwände 33 der Lenkerstütze 5. Das Druckstück 42 verfügt ferner über eine nach oben gerichtete Druckfläche 44, mit der sich das Druckstück 42 von unten an der Lenkerstütze 5 abstützen kann. Ferner ist an dem Druckstück 42 ein hakenförmiger Vorsprung 46 ausgebildet. Dieser greift, wie insbesondere Fig. 3 erkennen lässt, in die Öffnung bzw. Ausnehmung 35 in der Stirnwand 34 der Lenkerstütze ein.

In den Stirnflächen 43 des Druckstücks 42 münden Gewindebohrungen 47. In diese greifen Bolzen ein, die zugleich eines der Löcher 28a - 28 e der zweiten Lochreihe 28 durchragen. Die Abstützung der Konsole 12 an der Lenkerstütze 5 erfolgt daher an zwei in Fahrtrichtung zueinander beabstandeten Orten. Die in Fahrtrichtung F vordere Abstützung erfolgt über Bolzen 48 (Fig. 5), welche wahlweise durch ein Loch der Lochreihe 28 hindurch führen, und in die dahinter angeordnete Gewindebohrung 47 eingreifen. Dies führt über das Druckstück 42 und dessen nach oben weisende Druckfläche 44 zu einer Abstützung der Konsole 12 nach oben, d. h. zu der Lenkerstütze 5 hin. Zugleich verhindert der in die Ausnehmung 35 eingreifende Vorsprung 46, dass sich die Konsole in diesem vorderen Bereich nach vorne absenken kann.

Die zweite, stärker belastete Abstützung der Konsole 12 befindet sich weiter hinten. Hierzu durchdringen Bolzen 41 (Fig. 5) sowohl eines der Löcher der hinteren Lochreihe 26, als auch die dahinter angeordnete Querbohrung 39 an der Lenkerstütze 5.

Die Position und zugleich auch die Neigung der Konsole 12 lässt sich in fünf Stufen einstellen, wobei die Bolzen zur Realisierung der ersten Stufe durch die Löcher 26a, 28a und für die letzte Stufe durch die Löcher 26e, 28e hindurch geführt werden müssen. Dazwischen befinden sich die ebenfalls verwendbaren Paarungen 26b und 28b, 26c und 28c und 26d und 28d.

Mit der Wahl einer anderen Lochpaarung ändert sich zugleich der Anstellwinkel w1 (Fig. 1) der Konsole 12 in Bezug auf die Lenkerstütze 5. Auch dies ist für die Anpassung der Achshebevorrichtung an unterschiedlich gestaltete Achskonstruktionen von Vorteil. Von Vorteil ist ferner, dass sich der beschriebene Achslift auch nachträglich an einer vorhandenen, luftgefederten Fahrzeugachse montieren, d. h. nachrüsten lässt. Für eine Nachrüstung der Konsole 12 sind keine Eingriffe an dem Schwenkgelenk 4 erforderlich. Insbesondere ist es nicht notwendig, dessen Lagerbolzen zu entfernen, oder seine Verschraubung an der Lenkerstütze teilweise oder vollständig zu lösen.

Die um den Lagerbolzen 4 schwenkende Abrollfläche 15 kann anstelle an dem Schwenkarm 13 auch an anderen mitschwenkenden Bauteilen befestigt sein, z. B. an dem Längslenker oder an dem Achskörper.

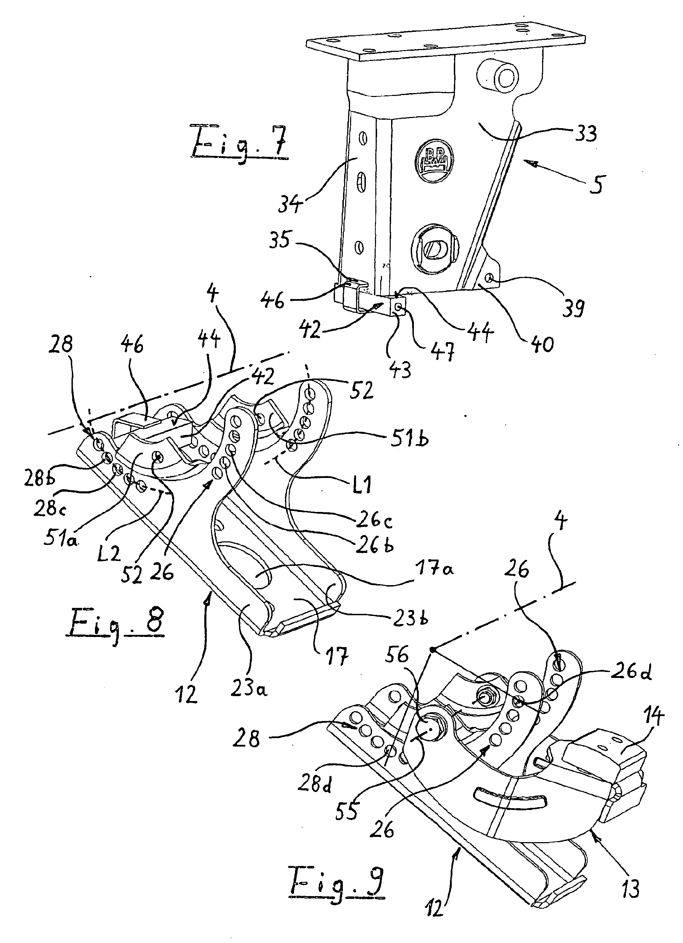

Eine zweite Ausführungsform des Achslifts ist in den Fign. 5 bis 9 dargestellt. Darin sind gleich wirkende Einzelteile auch mit denselben Bezugszeichen versehen. Während bei der ersten Ausführungsform (z.B. Fig. 1) der Schwenkarm 13 um den Lagerbolzen 4 des Längslenkers 3 verschwenkbar ist, befindet sich bei der zweiten Ausführungsform die Drehachse des Schwenkarms 13 an einem anderen, tiefer angeordneten Ort, und zwar an der verstellbaren Konsole 12.

Zu diesem Zweck sind an der Konsole 12 zusätzliche Laschen 51 a, 51 b mit jeweils einer Öffnung 52 darin ausgebildet. Die Laschen 51 a, 51 b sind Teilbereiche der beiden Schenkel 23a, 23b, weisen zueinander jedoch einen größeren Abstand auf, als die Schenkel 23a, 23b im übrigen. Die Öffnungen 52 liegen jeweils an einem Ort etwa in der Mitte zwischen der hinteren Lochreihe 26 und der vorderen Lochreihe 28. Jeweils ein Bolzen führt durch die Öffnung 52 und eine dazu fluchtende Öffnung in dem jeweiligen Seitenarm 13a, 13b des Schwenkarms 13, und bildet so die Achse 55, um die der Schwenkarm 13 verschwenkbar ist.

Vorzugsweise befinden sich die beiden Seitenarme 13a und 13b außen, und die Konsole 12 innen, so dass also die Konsole seitlich von den Seitenarmen übergriffen wird. Jeder der beiden Bolzen stützt sich mit seinem Bolzenkopf 56 an der Außenseite des jeweiligen Seitenarms 13a, 13b ab. Die so gebildete Achse 55 des Schwenkarms 13 befindet sich daher an der Konsole 12 und liegt unterhalb jenes Lagerbolzens 4, welcher den Längslenker 3 führt. Der Schwenkarm 13 ist daher vollständig von jenen Teilen der Achsaufhängung entkoppelt, die am dynamischen Fahrprozess beteiligt sind. Außerdem ist eine Nachrüstung nicht nur der Konsole mit der Hebevorrichtung, sondern auch des Schwenkarms besonders einfach.

### Bezugszeichenliste

- 1: Achskörper
- 3: Längslenker
- 4: Schwenkgelenk, Lagerbolzen
- 5: Lenkerstütze
- 9: Hebevorrichtung
- 10: Aufnahme
- 11: Membranzylinder
- 12: Konsole
- 13: Schwenkarm
- 13a: Seitenarm
- 13b: Seitenarm
- 14: Pufferelement
- 15: Abrollfläche
- 17: Trägerplatte
- 17a: Öffnung
- 18: Kolbenstange
- 19: Axialführung der Kolbenstange
- 20: Rolle
- 23a: Schenkel
- 23b: Schenkel
- 24: Vorsprung
- 26: Lochreihe
- 26a: Loch
- 26b: Loch
- 26c: Loch
- 26d: Loch
- 26e: Loch
- 28: Lochreihe
- 28a: Loch
- 28b: Loch
- 28c: Loch
- 28d: Loch
- 28e: Loch
- 31: Rand
- 32: Öffnung
- 33: Seitenwand
- 34: Stirnwand
- 35: Öffnung, Ausnehmung
- 39: Querbohrung
- 40: Lasche
- 41: Bolzen
- 42: Druckstück
- 43: Stirnfläche
- 44: Druckfläche
- 46: Vorsprung
- 47: Gewindebohrung
- 48: Bolzen
- 51a: Lasche
- 51b: Lasche
- 52: Öffnung
- 55: Achse
- 56: Bolzenkopf

- F: Fahrtrichtung
- L1: Kreislinie
- L2: Kreislinie
- w: Winkelabstand
- w1: Anstelllwinkel

## Patentansprüche

1. Achslift für luftgefederte Fahrzeugachsen, deren Achskörper an einem Längslenker befestigt ist, der mit seinem vorderen Ende schwenkbar an einer fahrzeugfesten Lenkerstütze (5) angelenkt ist, mit einer in verschiedenen Positionen unter der Lenkerstütze (5) festlegbaren Konsole (12) zur Aufnahme einer Hebevorrichtung (9), durch deren Betätigung die Fahrzeugachse anhebbar ist, wobei die Abstützung der Konsole (12) an der Lenkerstütze (5) an mindestens zwei in Fahrtrichtung (F) zueinander beabstandeten Orten erfolgt, und mit einer in Fahrtrichtung (F) vor dem Schwenkgelenk (4) angeordneten Lochreihe (28) zum wahlweisen Hindurchführen eines die Konsole (12) in einer bestimmten Schwenklage verriegelnden Bolzens (48),
**gekennzeichnet durch**
eine in Fahrtrichtung (F) hinter dem Schwenkgelenk (4) angeordnete, weitere Lochreihe (26) zum wahlweisen Hindurchführen eines die Konsole (12) in einer bestimmten Schwenklage an der Lenkerstütze (5) verriegelnden Bolzens (41).

2. Achslift nach Anspruch 1, **dadurch gekennzeichnet, dass** die Löcher (26a - 26e) der weiteren Lochreihe (26) auf einer Kreislinie (L1) angeordnet sind, deren Kreismittelpunkt mit dem Schwenkgelenk (4) zusammenfällt.

3. Achslift nach Anspruch 1 oder nach Anspruch 2, **dadurch gekennzeichnet, dass** die weitere Lochreihe (26) in der Konsole (12) ausgebildet ist.

4. Achslift nach einem der Ansprüche 1 bis 3, **dadurch gekennzeichnet, dass** die Lenkerstütze (5) zwei Seitenwände (33) aufweist, zwischen denen sich das vordere Ende des Längslenkers (3) befindet, und dass die Seitenwände (33) im Bereich ihres in Fahrtrichtung (F) hinteren Randes jeweils eine Querbohrung (39) aufweisen, durch die und durch eines der Löcher (26a - 26e) der weiteren Lochreihe (26) der Bolzen (41) hindurchführt.

5. Achslift nach Anspruch 4, **dadurch gekennzeichnet, dass** sich die Querbohrung (39) in einer am hinteren Rand der Lenkerstütze (5) angeformten Lasche (40) befindet.

6. Achslift nach Anspruch 5, **dadurch gekennzeichnet, dass** die Löcher (28a - 28e) der Lochreihe (28) auf einer Kreislinie (L2) angeordnet sind, deren Kreismittelpunkt mit dem Schwenkgelenk (4) zusammenfällt.

7. Achslift nach Anspruch 5 oder Anspruch 6, **dadurch gekennzeichnet, dass** die Lochreihe (28) in der Konsole (12) ausgebildet ist.

8. Achslift nach einem der Ansprüche 5 bis 7, **dadurch gekennzeichnet, dass** die Anzahl der Löcher in den beiden Lochreihen (26, 28) gleich ist.

9. Achslift nach Anspruch 8, **dadurch gekennzeichnet, dass** die auf das Schwenkgelenk (4) bezogenen Winkelabstände (w) zwischen den Löchern der hinteren Lochreihe (26) gleich sind den Winkelabständen (w) zwischen den Löchern der vorderen Lochreihe (28).

10. Achslift nach einem der Ansprüche 5 bis 9, **dadurch gekennzeichnet, dass** sich die Konsole aus einer zentralen Trägerplatte (17), an der sich die Hebevorrichtung (9) abstützt, und beidseitig angeordneten Schenkeln (23a, 23b) zusammensetzt, in denen sich jeweils die beiden Lochreihen (26, 28) befinden, wobei im Bereich der vorderen Lochreihen (28) ein Druckstück (42) zwischen die Schenkel (23a, 23b) eingesetzt und mit diesen verschraubt ist, und wobei sich das Druckstück (42) mit einer daran ausgebildeten Druckfläche (44) von unten her an der Lenkerstütze (5) abstützt.

11. Achslift nach Anspruch 10, **dadurch gekennzeichnet, dass** das Druckstück (42) mit einem formschlüssig in eine Öffnung oder Ausnehmung (35) der Lenkerstütze (5) eingreifenden Vorsprung (46) versehen ist.

12. Achslift nach einem der vorangehenden Ansprüche, **dadurch gekennzeichnet, dass** die Hebevorrichtung (9) mit einem aus dem Gehäuse der Hebevorrichtung herausgeführten Abtriebsteil gegen einen auf einer horizontalen Achse gelagerten Schwenkarm (13) abstützbar ist, der sich bei betätigter Hebevorrichtung (9) von unten gegen den Längslenker legt und diesen anhebt.

13. Achslift nach Anspruch 12, **dadurch gekennzeichnet, dass** der Schwenkarm (13) an der Konsole (12) schwenkbar gelagert ist.

14. Achslift nach Anspruch 12 oder 13, **dadurch gekennzeichnet, dass** sich die Achse der schwenkbaren Lagerung des Schwenkarms (13) unterhalb des Schwenkgelenks (4) befindet

15. Achslift nach einem der Ansprüche 12 bis 14, **dadurch gekennzeichnet, dass** das Abtriebsteil der Hebevorrichtung (9) eine Kolbenstange (18) mit einer daran drehbar gelagerten Rolle (20) ist, dass sich die Rolle (20) von unten her gegen eine Abrollfläche (15) an dem Schwenkarm (13) abstützt, und dass die Abrollfläche (15) als zur Rolle (20) hin konkav gekrümmte Evolvente gestaltet ist, bei der die Flächennormale des jeweiligen Anlageortes der Rolle (20) mit der Längsachse der Kolbenstange (18) zusammenfällt.

16. Konsole zur Abstützung eines Achslifts an einer Lenkerstütze einer Fahrzeugachse, mit einer Aufnahme (10) für die Befestigung einer Hebevorrichtung, und mit an zwei in Fahrtrichtung zueinander beabstandeten Orten angeordneten Verbindungsmitteln mit der Lenkerstütze, wobei die Verbindungsmittel einen Bolzen (48) und eine in der Konsole (12) ausgebildete Lochreihe (28) umfassen,
**dadurch gekennzeichnet,**
**dass** die Verbindungsmittel ferner eine in der Konsole (12) ausgebildete weitere Lochreihe (26) zum wahlweisen Hindurchführen eines die Konsole (12) in einer bestimmten Schwenklage an der Lenkerstütze verriegelnden Bolzens (41) umfassen, wobei die weitere Lochreihe (26) in Verlängerung der Lochreihe (28) angeordnet ist, die Löcher (26a - 26e, 28a - 28e) jeder der beiden Lochreihen (26, 28) auf jeweils einer Kreislinie (L1, L2) angeordnet und die Kreislinien (L1, L2) auf denselben Kreismittelpunkt bezogen sind.

17. Konsole nach Anspruch 16, **dadurch gekennzeichnet, dass** die auf den Kreismittelpunkt bezogenen Winkelabstände (w) zwischen den Löchern der weiteren Lochreihe (26) gleich sind den Winkelabständen (w) zwischen den Löchern der Lochreihe (28).

18. Konsole nach Anspruch 16 oder 17, **dadurch gekennzeichnet, dass** diese sich aus einer zentralen Trägerplatte (17), an der sich die Hebevorrichtung abstützen kann, und beidseitig angeordneten Schenkeln (23a, 23b) zusammensetzt, in denen sich jeweils die beiden Lochreihen (26, 28) befinden, wobei im Bereich der Lochreihen (28) ein mit einer Druckfläche (44) versehenes Druckstück (42) zwischen die Schenkel (23a, 23b) eingesetzt und mit diesen verschraubt ist.

19. Konsole nach Anspruch 18, **dadurch gekennzeichnet, dass** das Druckstück (42) mit einem Vorsprung (46) zum formschlüssigen Eingreifen in eine Öffnung oder Ausnehmung der Lenkerstütze versehen ist.

20. Konsole nach einem der Ansprüche 16 bis 19, **dadurch gekennzeichnet, dass** daran ein Schwenkarm (13) schwenkbar gelagert ist.

## Claims

1. An axle lift for air-sprung vehicle axles, the axle casing of which is fastened to a trailing arm which is articulated in a pivotable manner at its front end to an arm support (5) fixed with respect to the vehicle, with a bracket (12) capable of being fixed in various positions below the arm support (5) in order to receive a lifting apparatus (9), by the actuation of which the vehicle axle is capable of being lifted, wherein the bracket (12) is supported on the arm support (5) in at least two places situated at a distance from each other in the direction of travel (F), and with a row (28) of holes arranged in front of the pivot joint (4) in the direction of travel (F) for optionally passing through a pin (48) which locks the bracket (12) in a specified pivot position, **characterized by** a further row (26) of holes arranged behind the pivot joint (4) in the direction of travel (F) for optionally passing through a pin (41) which locks the bracket (12) in a specified pivot position on the arm support (5).

2. An axle lift according to Claim 1, **characterized in that** the holes (26a to 26e) of the further row (26) of holes are arranged on a circular line (L1), the centre of the circle of which coincides with the pivot joint (4).

3. An axle lift according to Claim 1 or according to Claim 2, **characterized in that** the further row (26) of holes is formed in the bracket (12).

4. An axle lift according to any one of Claims 1 to 3, **characterized in that** the arm support (5) has two side walls (33) between which the front end of the trailing arm (3) is situated, and in the region of their rear edge in the direction of travel (F) the side walls (33) have in each case a transverse bore (39) through which and through one of the holes (26a to 26e) of the further row (26) of holes the pin (41) passes.

5. An axle lift according to Claim 4, **characterized in that** the transverse bore (39) is provided in a fastening plate (40) formed integrally on the rear edge of the arm support (5).

6. An axle lift according to Claim 5, **characterized in that** the holes (28a to 28e) of the row (28) of holes are arranged on a circular line (L2), the centre of the circle of which coincides with the pivot joint (4).

7. An axle lift according to Claim 5 or Claim 6, **characterized in that** the row (28) of holes is formed in the bracket (12).

8. An axle lift according to any one of Claims 5 to 7, **characterized in that** the number of holes in the two rows (26, 28) of holes is equal.

9. An axle lift according to Claim 8, **characterized in that** the angular distances (w) with respect to the pivot joint (4) between the holes of the rear row (26) of holes are equal to the angular distances (w) between the holes of the front row (28) of holes.

10. An axle lift according to any one of Claims 5 to 9, **characterized in that** the bracket is formed from a central carrier plate (17), on which the lifting apparatus (9) is supported, and limbs (23a, 23b) which are arranged on both sides and in which the two rows (26, 28) of holes are present in each case, wherein in the region of the front row (28) of holes a thrust member (42) is inserted between the limbs (23a, 23b) and is screwed to them, and wherein the thrust member (42) is supported from below on the arm support (5) by a thrust face (44) formed on it.

11. An axle lift according to Claim 10, **characterized in that** the thrust member (42) is provided with a projection (46) engaging with positive locking in an opening or recess (35) in the arm support (5).

12. An axle lift according to any one of the preceding Claims, **characterized in that** the lifting apparatus (9) is capable of being supported, by a drive part extending out of the housing of the lifting apparatus, against a pivot arm (13) which is mounted on a horizontal axle and which when the lifting apparatus (9) is actuated abuts against the trailing arm from below and lifts it.

13. An axle lift according to Claim 12, **characterized in that** the pivot arm (13) is mounted on the bracket (12) in a pivotable manner.

14. An axle lift according to Claim 12 or 13, **characterized in that** the axis of the pivotable mounting of the pivot arm (13) is situated below the pivot joint (4).

15. An axle lift according to any one of Claims 12 to 14, **characterized in that** the drive part of the lifting apparatus (9) is a piston rod (18) with a roller (20) mounted on it in a rotatable manner, the roller (20) is supported from below against a rolling face (15) on the pivot arm (13), and the rolling face (15) is designed in the form of an involute which is curved in a concave manner towards the roller (20) and in which the surface normal of the respective abutment point of the roller (20) coincides with the longitudinal axis of the piston rod (18).

16. A bracket for supporting an axle lift on an arm support of a vehicle axle, with a receiving means (10) for fastening a lifting apparatus, and with connecting means - arranged at two places situated at a distance from each other in the direction of travel - to the arm support, wherein the connecting means comprise a pin (48) and a row (28) of holes formed in the bracket (12), **characterized in that** the connecting means further comprise a further row (26) of holes formed in the bracket (12) for optionally passing through a pin (41) which locks the bracket (12) in a specified pivot position on the arm support, wherein the further row (26) of holes is arranged as a continuation of the row (28) of holes, the holes (26a to 26e, 28a to 28e) of each of the two rows (26, 28) of holes being arranged on a circular line (L1, L2) in each case and the circular lines (L1, L2) relating to the same centre of a circle.

17. A bracket according to Claim 16, **characterized in that** the angular distances (w) with respect to the centre of the circle between the holes of the further row (26) of holes are equal to the angular distances (w) between the holes of the row (28) of holes.

18. A bracket according to Claim 16 or 17, **characterized in that** it is formed from a central carrier plate (17), on which the lifting apparatus can be supported, and limbs (23a, 23b) which are arranged on both sides and in which the two rows (26, 28) of holes are present in each case, wherein in the region of the rows (28) of holes a thrust member (42) provided with a thrust face (44) is inserted between the limbs (23a, 23b) and is screwed to them.

19. A bracket according to Claim 18, **characterized in that** the thrust member (42) is provided with a projection (46) for engaging with positive locking in an opening or recess in the arm support.

20. A bracket according to any one of Claims 16 to 19, **characterized in that** a pivot arm (13) is mounted on it in a pivotable manner.

## Revendications

1. Elévateur d'essieu pour des essieux de véhicule à suspension pneumatique, dont le corps d'essieu est fixé sur un bras oscillant longitudinal, lequel est articulé par son extrémité avant de façon basculante sur un support de bras oscillant (5) solidaire du véhicule, comprenant une console (12) pouvant être fixée dans différentes positions au-dessous du support de bras oscillant (5) pour le logement d'un dispositif de levage (9), par l'actionnement duquel l'essieu de véhicule peut être soulevé, le soutien de la console (12) s'effectuant sur le support de bras oscillant (5) en au moins deux endroits espacés l'un de l'autre dans le sens de marche (F), et une série de trous (28) disposée dans le sens de marche (F) en amont de l'articulation pivotante (4) pour le passage éventuel d'un boulon (48) verrouillant la console (12) dans une position de basculement définie,
**caractérisé par**
une autre série de trous (26), disposée dans le sens de marche (F) en aval de l'articulation pivotante (4) pour le passage éventuel d'un boulon (41) verrouillant la console (12) dans une position de basculement définie sur le support de bras oscillant (5).

2. Elévateur d'essieu selon la revendication 1, **caractérisé en ce que** les trous (26a - 26e) de l'autre série de trous (26) sont disposés sur une ligne de cercle (L1), dont le centre coïncide avec l'articulation pivotante (4).

3. Elévateur d'essieu selon la revendication 1 ou selon la revendication 2, **caractérisé en ce que** l'autre série de trous (26) est réalisée dans la console (12).

4. Elévateur d'essieu selon l'une des revendications 1 à 3, **caractérisé en ce que** le support de bras oscillant (5) présente deux parois latérales (33), entre lesquelles se trouve l'extrémité avant du bras oscillant longitudinal (3), et **en ce que** les parois latérales (33) présentent chacune dans la zone de leur bord, arrière dans le sens de marche (F), un alésage transversal (39), le boulon (41) passant par cet alésage et par l'un des trous (26a - 26e) de l'autre série de trous (26).

5. Elévateur d'essieu selon la revendication 4, **caractérisé en ce que** l'alésage transversal (39) se trouve dans une patte (40) formée sur le bord arrière du support de bras oscillant (5).

6. Elévateur d'essieu selon la revendication 5, **caractérisé en ce que** les trous (28a-28e) de la série de trous (28) sont disposés sur une ligne circulaire (L2), dont le centre coïncide avec l'articulation pivotante (4).

7. Elévateur d'essieu selon la revendication 5 ou la revendication 6, **caractérisé en ce que** la série de trous (28) est réalisée dans la console (12).

8. Elévateur d'essieu selon l'une des revendications 5 à 7, **caractérisé en ce que** le nombre des trous est identique dans les deux séries de trous (26, 28).

9. Elévateur d'essieu selon la revendication 8, **caractérisé en ce que** les espacements d'angle (w) rapportés à l'articulation pivotante (4) entre les trous de la série de trous (26) arrière sont identiques aux espacements d'angle (w) entre les trous de la série de trous avant (28).

10. Elévateur d'essieu selon l'une des revendications 5 à 9, **caractérisé en ce que** la console comprend une plaque support (17) centrale, sur laquelle le dispositif de levage (9) s'appuie, et des branches (23a, 23b) disposées des deux côtés, dans chacune desquelles se trouvent les deux séries de trous (26, 28), une pièce de pression (42) étant insérée entre les branches (23a, 23b) dans la zone des séries de trou avant (28) et étant vissée avec celles-ci, et la pièce de pression (42) s'appuyant avec une surface de pression (44) réalisée dessus par le bas sur le support de bras oscillant (5).

11. Elévateur d'essieu selon la revendication 10, **caractérisé en ce que** la pièce de pression (42) est dotée d'une saillie (46) s'engageant par complémentarité de formes dans une ouverture ou un évidement (35) du support de bras oscillant (5).

12. Elévateur d'essieu selon l'une des revendications précédentes, **caractérisé en ce que** le dispositif de levage (9) peut être appuyé avec une partie de sortie, guidée à la sortie du boîtier du dispositif de levage, contre un bras pivotant (13) monté sur un axe horizontal, lequel bras se pose, lorsque le dispositif de levage (9) est actionné, par le bas contre le bras oscillant longitudinal et soulève celui-ci.

13. Elévateur d'essieu selon la revendication 12, **caractérisé en ce que** le bras pivotant (13) est monté de façon basculante sur la console (12).

14. Elévateur d'essieu selon la revendication 12 ou 13, **caractérisé en ce que** l'essieu de la fixation basculante du bras pivotant (13) se trouve au-dessous de l'articulation pivotante (4).

15. Elévateur d'essieu selon l'une des revendications 12 à 14, **caractérisé en ce que** la partie de sortie du dispositif de levage (9) est une tige de piston (18) avec un rouleau (20) monté de façon pivotante dessus, **en ce que** le rouleau (20) s'appuie par le bas contre une surface de déroulement (15) sur le bras pivotant (13), et **en ce que** la surface de déroulement (15) est conçue comme une développante, incurvée de façon concave en direction du rouleau (20), développante sur laquelle la perpendiculaire à la surface du lieu de montage respectif du rouleau (20) coïncide avec l'axe longitudinal de la tige de piston (18).

16. Console pour le soutien d'un élévateur d'essieu sur un appui de bras oscillant d'un essieu de véhicule, comprenant un logement (10) pour la fixation d'un dispositif de levage, et des moyens de liaison disposés sur deux emplacements espacés l'un de l'autre dans le sens de marche, avec le support de bras oscillant, les moyens de liaison comprenant un boulon (48) et une série de trous (28) formée dans la console (12),
**caractérisée en ce que** les moyens de liaison comprennent également une autre série de trous (26) formée dans la console (12) pour le passage éventuel d'un boulon (41) verrouillant la console (12) dans une position de basculement définie sur le support de bras oscillant, l'autre série de trous (26) étant disposée dans le prolongement de la série de trous (28), les trous (26a - 26e, 28a - 28e) de chacune des deux séries de trous (26, 28) étant disposés sur respectivement une ligne circulaire (L1, L2) et les lignes circulaires (L1, L2) étant rapportées au même centre de cercle.

17. Console selon la revendication 16, **caractérisée en ce que** les espacements d'angle (w) rapportés au centre de cercle entre les trous de l'autre série de trous (26) sont identiques aux espacements d'angle (w) entre les trous de la série de trous (28).

18. Console selon la revendication 16 ou 17, **caractérisée en ce qu'**elle se compose d'une plaque support centrale (17), sur laquelle le dispositif de levage peut s'appuyer, et de branches (23a, 23b) disposées des deux côtés, dans chacune desquelles les deux séries de trous (26, 28) se trouvent, une pièce de pression (42) dotée d'une surface de pression (44) étant insérée entre les branches (23a, 23b) dans la zone des séries de trous (28) et étant vissée avec celles-ci.

19. Console selon la revendication 18, **caractérisée en ce que** la pièce de pression (42) est dotée d'une saillie (46) pour l'engagement par complémentarité de forme dans une ouverture ou un évidement du support de bras oscillant.

20. Console selon l'une des revendications 16 à 19, **caractérisée en ce qu'**un bras oscillant (13) est monté de façon pivotante dessus.
